# DEMANDE DE BREVET EUROPEEN

(11) **EP 2 631 711 A1**
(43) Date de publication de la demande: **28.08.2013**
(21) Numéro de dépôt: 13156045.0
(22) Date de dépôt: 20.02.2013
(51) Int. Cl.: G03B 15/06, G03B 17/53

(54) **Dispositif pour acquérir une image d'un sujet**

(30) Priorité: 23.02.2012 FR 1251686
(71) Demandeur: Pont, Philippe, 92700 Colombes (FR); Roulot, Eric, 92210 Saint-Cloud (FR)
(72) Inventeur: Pont, Philippe, 92700 Colombes (FR); Roulot, Eric, 92210 Saint-Cloud (FR)
(74) Mandataire: Novagraaf Technologies

(57) **Abrégé**

Un dispositif (1) pour acquérir une image d'un sujet, le dispositif (1) posé sur le sol comprenant : un emplacement (10) pour recevoir un sujet devant un fond (12) ; au moins un appareil (13) de prise de vues pour acquérir et produire une image du sujet, ledit appareil (13) présentant un axe optique (A) ; un dispositif de traitement (15) de l'image pour traiter l'image numérique ; un miroir (16) sans tain comprenant une face réfléchissante (17) orientée vers ledit fond (12), ledit miroir (16) étant positionné à un angle (α) compris entre 30 et 60° par rapport à l'axe optique (A) et étant disposé entre l'emplacement (10) et l'au moins un appareil (13) de prise de vue ; au moins un dispositif d'affichage (20) pour afficher une image numérique instantanée ou une image traitée par ledit dispositif de traitement (15), ledit dispositif (20) étant positionné à un angle (β) compris entre -45 et 45° par rapport à l'axe optique (A) et étant orienté vers ladite face réfléchissante (17). En outre, le dispositif d'affichage (20) et le miroir (16) sans tain s'étendent chacun suivant un plan (P1,P2) perpendiculaire au sol.

## Description

Est ici concerné un dispositif pour acquérir une image d'un sujet. Plus particulièrement, il s'agit d'un dispositif à développement instantané. Ainsi, le dispositif photographique est conçu pour acquérir une image d'un sujet afin d'être enregistrée et/ou imprimée de préférence de manière automatique.

Dans US6619860, est décrit une cabine posée sur le sol comprenant :
un emplacement our recevoir un sujet devant un fond
au moins un appareil de prise de vues pour acquérir et produire une image du sujet, ledit appareil présentant un axe optique ;
   - un dispositif de traitement de l'image pour traiter l'image ;
   - un miroir sans tain comprenant une face réfléchissante orientée vers ledit fond, ledit miroir étant positionné à un angle compris entre 30 et 60° par rapport à l'axe optique et étant disposé entre l'emplacement et l'au moins un appareil de prise de vue ;
   - au moins un dispositif d'affichage pour afficher une image instantanée ou une image traitée par ledit dispositif de traitement, ledit dispositif étant positionné à un angle compris entre -45 et 45° par rapport à l'axe optique et étant orienté vers ladite face réfléchissante.

En outre, dans US66198860, le miroir s'étend suivant un plan incliné par rapport au sol et le dispositif d'affichage s'étend suivant un plan parallèle au sol.

Lorsque le sujet prend place dans l'emplacement prévu, il a face à lui un miroir, incliné par rapport au sol, lui renvoyant l'image du dispositif d'affichage disposé en contrebas du miroir.

Lorsqu'un sujet désire prendre une photographie de lui en toute autonomie, c'est-à-dire sans l'intervention d'un tiers, il peut voir en temps réel l'évolution du rendu de l'image transmise par l'appareil de prise de vue au dispositif d'affichage, via le miroir sans tain. L'autre option possible offerte par l'utilisateur est de regarder directement le rendu visuel de cette même image sur le dispositif d'affichage disposé en contrebas du miroir.

Dans US6619860, lorsque l'utilisateur regarde directement le rendu visuel sur le dispositif d'affichage, il doit nécessairement baisser les yeux. Dans ce cas, le dispositif d'affichage représente le sujet baissant les yeux.

Dans le domaine de la photographie, il est de notoriété commune qu'une photographie bien réalisée est une photographie où le sujet photographié présente une apparence agréable. La difficulté principale pour un photographe professionnel est de réussir à ce que le sujet ait une attitude photogénique. Une attitude photogénique se mesure par la faculté à faire une pose correcte, un sourire agréable et plus particulièrement par la faculté à avoir un regard profond et détendu, qui par voie de conséquence, joue sur la physionomie complète du visage. Pour les sujets (modèles) amateurs, ce sont souvent ces deux points qui posent problème et la solution selon US6619860 ne permet pas de résoudre ce problème puisque lorsque le sujet se regarde dans le dispositif d'affichage, il voit sur le dispositif d'affichage une image de lui le représentant les yeux baissés.

Si le sujet ne baisse pas les yeux et qu'il regarde directement le dispositif d'affichage, la photographie prise représentera alors le sujet avec la tête penchée en avant, en vue plongeante.

Dans ce contexte, le problème ici posé est de réaliser un dispositif pour acquérir une image d'un sujet du type précité qui soit de construction simple et permettant au sujet d'améliorer seul (ou par une tierce personne sur place ou à distance) le rendu de la photographie le représentant, et cela en permettant notamment au sujet de faire une prise de vue de lui-même en vue trois-quarts gauche ou trois-quarts droit.

La solution proposée par la présente invention est que, le dispositif d'affichage et le miroir sans tain s'étendent chacun suivant un plan perpendiculaire au sol.

Une telle solution permet au sujet reçu dans l'emplacement d'élargir les possibilités de visualisation de son image en temps réel. Le positionnement et l'orientation du miroir permet d'agrandir à l'infini la taille de l'image, notamment par la possibilité d'éloigner le miroir du dispositif d'affichage de manière illimitée, et également par la possibilité d'avoir un miroir présentant des dimensions relativement grandes, ce qui n'est pas faisable lorsque le miroir est parallèle au sol où les dimensions du dispositif d'affichage et du miroir sont relativement beaucoup plus dépendants des différents éléments constitutifs du dispositif de prise de vue. Plus précisément, le sujet peut visualiser son image sur le miroir sans tain s'il souhaite faire un autoportrait en vue de face, et il peut également visualiser son image sur le dispositif d'affichage s'il souhaite faire un autoportrait en vue de trois-quarts. La vue de trois-quarts est indifféremment une vue de trois-quarts gauche ou une vue de trois-quarts droite.

Ainsi, cette solution permet au sujet de faire un « book » (recueil de photographies du sujet) plus complet.

Cette solution permet au sujet de faire des prises de vue en vue de face et en vue de trois-quarts de manière autonome et ludique ; autonome et ludique, parce que le seul sujet peut contrôler sa gestuelle et ses attitudes grâce au retour direct qu'il obtient en visualisant soit en direction du miroir sans tain s'il souhaite acquérir une photographie en vue de face, soit en direction du dispositif d'affichage s'il souhaite obtenir une photographie en vue de trois-quarts voir même de profil.

Un tel agencement est particulièrement favorable à la réalisation de photographies réalisées par le sujet lui-même. Cela permet en outre de réaliser des photographies de la qualité de celle d'un studio photographique professionnel.

Comme ci-dessus mentionné, réaliser une photo où le sujet photographié présente une apparence agréable est difficile. Le principe de l'invention consiste non seulement à ce que le sujet photographié se voit en continu que ce soit en vue de face de trois-quarts ou de profil mais également en ce qu'il se voit avec une image flatteuse de lui même due aux lumières professionnelles et aux réglages adéquats de l'appareil de prise de vue. Cela permet notamment d'améliorer la qualité de pose du sujet et sa participation gestuelle et faciale à la séance de prises de vues. Selon des essais réalisés par un photographe professionnel, l'adhésion du sujet à la séance de prise s'en trouve amélioré et le résultat, c'est-à-dire les photographies prises, s'en trouvent améliorées.

L'adhésion du sujet à la séance de photographies est en tout ou partie résolue par le fait que des sujets difficiles à photographier ou non habitués peuvent voir le résultat immédiat de leur pose, notamment avec une image de qualité améliorée. En conséquence, ils n'appréhendent pas le résultat et proposent une attitude, comme le regard, de bonne qualité, engendrant concomitamment une photographie avec un bon rendu.

Dans un mode réalisation, le miroir est monté sur un pivot pivotant selon un axe perpendiculaire au sol.

De cette manière, le sujet peut orienter le miroir suivant ses désirs. Une telle caractéristique est particulièrement avantageuse si le dispositif pour acquérir une image d'un sujet comprend deux dispositifs d'affichage opposés. De cette manière, le sujet peut choisir d'orienter la face réfléchissante du miroir vers sa gauche s'il souhaite avoir une prise de vue en trois-quarts droite, ou vers sa droite s'il souhaite avoir une prise de vue en trois-quarts gauche.

Dans un mode de réalisation, le miroir pourrait être positionné à 45° par rapport à l'axe optique.

Une telle orientation est une position particulièrement adaptée pour que le sujet puisse voir distinctement l'image du dispositif d'affichage se reflétant sur la face réfléchissante du miroir sans tain. Par exemple, pour un miroir positionné à moins de 30° par rapport à l'axe optique, il sera difficile pour le sujet de se voir sur le miroir sans tain parce que l'angle de vue du miroir est trop faible. Pour un miroir positionné à plus de 60°, l'angle de vue sera satisfaisant, mais dans l'hypothèse où le dispositif d'affichage est positionné parallèlement à l'axe optique, cela poserait des problèmes d'encombrement trop grand.

Dans un autre mode de réalisation, le dispositif d'affichage pourrait être positionné parallèlement à l'axe optique.

Positionner le dispositif d'affichage parallèlement à l'axe optique optimise l'encombrement dans la cabine tout en permettant à l'image de se refléter dans le miroir sans tain.

Dans un autre mode de réalisation, le dispositif pour acquérir une image d'un sujet comprendrait un pupitre de commande communiquant avec ledit au moins un appareil de prise de vue et/ou ledit dispositif de traitement, ledit pupitre étant disposé à proximité immédiate dudit emplacement.

La disposition d'un tel pupitre permet au sujet de déclencher la prise de vue au meilleur moment évitant ainsi les grimaces, les yeux qui clignent. En outre, le déclenchement de la prise de vue par le sujet au moment souhaité et au moyen du pupitre permet de proposer une meilleure attitude, et notamment une meilleure qualité de regard.

Dans un autre mode de réalisation, le dispositif pour acquérir une image d'un sujet pourrait comprendre un premier appareil orienté horizontalement pour faire des prises de vue du type portrait et un second appareil orienté verticalement pour faire des prises de vue du type paysage.

Equiper le dispositif de ces deux appareils distincts offre la possibilité à l'utilisateur de faire une photographie en format portrait ou en format paysage.

Dans un autre mode de réalisation, le dispositif pour acquérir une image d'un sujet pourrait comprendre un premier dispositif d'affichage rectangulaire dans lequel le plus grand côté s'étend parallèlement au sol et un second dispositif d'affichage rectangulaire dans lequel le plus petit côté s'étend parallèlement au sol.

Dans un autre mode de réalisation, les premier et second appareils ci-dessus mentionnés communiqueraient avec les premier et second dispositifs d'affichage ci-dessus mentionnés.

Dans un autre mode de réalisation, le dispositif de traitement d'image comprendrait des moyens pour compenser la perte de puissance lumineuse due au miroir sans tain.

La disposition de tels moyens permet d'améliorer le rendu visuel de l'image, transmise instantanément au sujet.

Dans un autre mode de réalisation, le miroir sans tain comprendrait une ouverture disposée dans l'alignement de l'axe optique.

L'agencement d'une telle ouverture évite avantageusement la perte de puissance lumineuse reçue par l'appareil de prise de vue. Suivant l'axe optique, l'appareil de prise de vue reçoit alors directement les rayons lumineux provenant du sujet photographié.

Dans un autre mode de réalisation, l'au moins un appareil serait monté articulé sur un support suivant des axes horizontal et vertical, ledit support étant commandé par ledit pupitre de commande pour régler l'inclinaison horizontale et/ou verticale.

De cette manière, le sujet peut contrôler des paramètres supplémentaires d'orientation angulaire de l'appareil de prise de vue tout en se voyant continument indifféremment sur le miroir sans tain ou le dispositif d'affichage.

Toutes les caractéristiques qui précèdent peuvent se combiner en tout ou partie.

D'autres caractéristiques et avantages ressortiront encore de la description qui est faite ci-après, à titre indicatif et nullement limitatif, en référence aux dessins annexés, dans lesquels :
- la figure 1 montre une vue de dessus du dispositif pour acquérir une image d'un sujet avec ses moyens essentiels ;
- la figure 2 montre un schéma de principe du dispositif pour acquérir une image suivant un autre mode de réalisation dans lequel le dispositif est équipé d'un premier appareil de prise de vues orienté horizontalement et un second appareil de prise de vue orienté verticalement ;
- la figure 3 montre une vue similaire à la figure 2 où est montrée en outre un support portant les deux appareils de prise de vue horizontal et vertical.

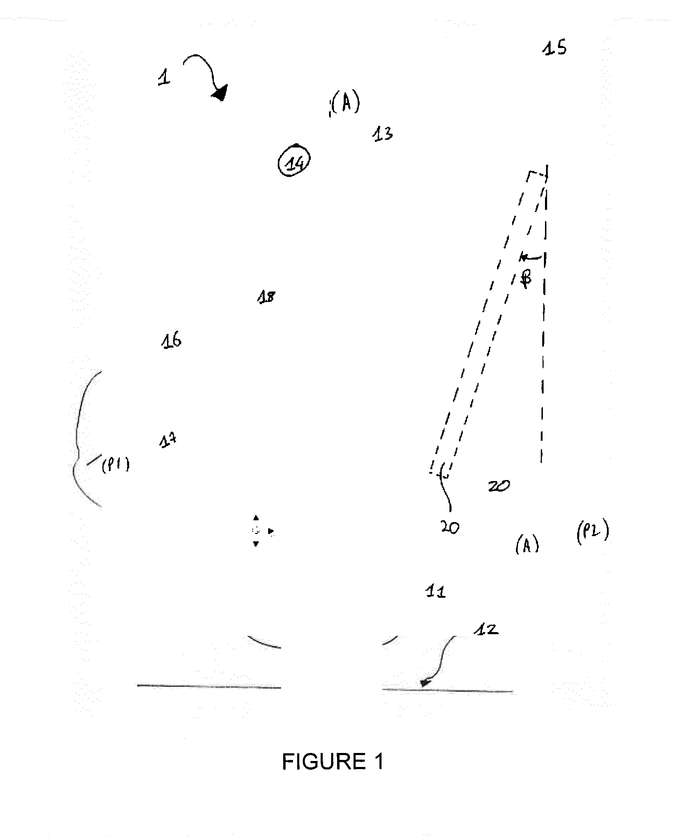

Est montrée sur la figure 1, un dispositif pour acquérir une image d'un sujet **1** selon la présente invention. Ce dispositif **1,** formant de préférence cabine, comprend un emplacement **10** avec un encombrement suffisant pour recevoir un sujet **11** et un espace suffisant pour loger les moyens nécessaires pour faire des prises de vue conformes à la présente invention. Les moyens nécessaires pour faire des prises de vue sont ci-dessous décrits.

Préférentiellement, le dispositif **1** forme un espace clos, à l'abri des regards, et comprend une ouverture (non représentée) pouvant être refermée par exemple au moyen d'un rideau ou d'une porte (non représentés).

Dans un mode de réalisation, un dispositif **1** forme un module pliable. Le module pliable pour acquérir une image d'un sujet pourrait tenir dans une pièce.

L'emplacement **10** où est reçu le sujet présente un agencement adapté à se conformer à la prise de vue souhaitée. Plus précisément, l'emplacement **10** peut par exemple comprendre des moyens pour s'assoir, des moyens pour s'allonger, ou être laissé libre de manière à ce que le sujet se tienne debout. Comme montré sur la figure 1, l'emplacement **10** se situe devant un fond **12,** ledit fond **12** figurant alors sur la photographie lors de la prise de vue.

Figure 1,2,3, on voit que l'emplacement **10** est placé dans l'alignement direct d'au moins un appareil **13** de prise de vues de préférence électronique, pour acquérir et produire une image de préférence numérique du sujet.

L'au moins un appareil **13** de prise de vues présente un axe optique (A) orienté dans la direction et dans le sens du sujet à photographier. Sa position dans le dispositif **1,** c'est-à-dire sa hauteur par rapport au sol et sa disposition par rapport aux parois du dispositif **1** est déterminée par des choix de conception inhérent aux moyens composant le dispositif **1** et au type de prise de vue souhaité par le sujet.

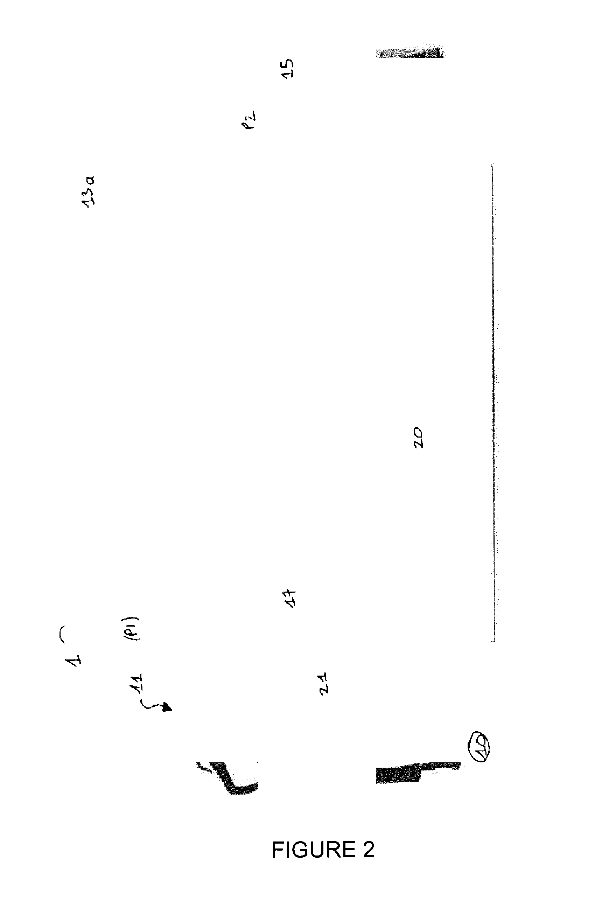

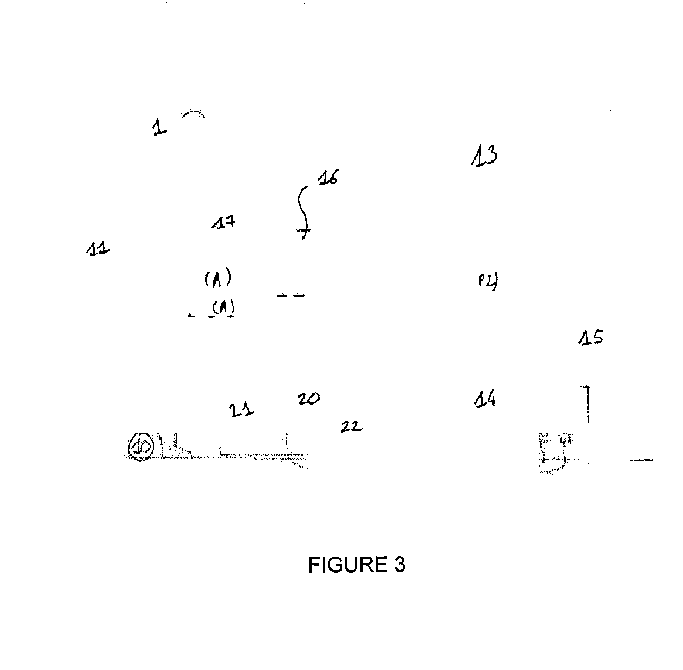

Dans un mode de réalisation représenté sur les figures 2 et 3, le dispositif **1** comprend un premier appareil **13a** orienté horizontalement pour faire des prises de vue du type portrait et un second appareil **13b** orienté verticalement pour faire des prises de vue du type paysage.

Dans un mode de réalisation de l'invention représenté sur la figure 3, l'au moins un appareil **13** est monté articulé sur un support **22** suivant des axes horizontal et vertical, ledit support **22** étant commandé par un pupitre **21** de commande pour régler l'inclinaison horizontale et/ou verticale.

Dans un mode de réalisation de l'invention, l'au moins un appareil **13** de prise de vue est positionné dans une chambre noire **14** derrière un miroir **16** sans tain.

En combinant les deux modes de réalisation ci-dessus mentionnés, il est par exemple possible d'avoir un dispositif **1** comprenant un premier appareil **13**a de prise de vue horizontal et un second appareil 13b de prise de vue vertical, positionnés dans une chambre noire **14** sur le support **22** motorisé, par exemple situés à mi hauteur par rapport au sol, derrière le miroir **16.**

Dans un mode de réalisation, le ou les appareils **13** de prise de vues sont positionnés sur ledit support **22** motorisé permettant des déplacements selon plusieurs axes : vertical, horizontal et transversal. En outre, le support **22** permet également de régler l'inclinaison : descendante, ascendante, droite et gauche.

Le miroir **16** sans tain est disposé entre l'emplacement **10** et l'au moins un appareil **13** de prise de vue. Le miroir **16** comprend une face réfléchissante **17** orientée vers le sujet, vers le fond **12,** et une face non réfléchissante **18** orientée vers l'au moins un appareil **13** de prise de vue. De cette manière, le sujet peut voir le reflet de son image transmise par le dispositif d' affichage sur le miroir sans tain **16** tout en permettant à l'au moins un appareil **13** de prise de vue - disposé derrière le miroir **16** par rapport au sujet - de faire une photographie du sujet.

Comme montré figure 1,2,3, le miroir **16** sans tain est positionné à un angle α compris entre 30 et 60° par rapport à l'axe optique (A) et est disposé entre l'emplacement **10** et l'au moins un appareil **13** de prise de vue. Autrement dit, le miroir **16** sans tain s'étend dans un plan (P1) formant un angle α compris entre 30 et 60° par rapport à l'axe optique (A).

En outre, comme montré sur les figures 1,2,3, le miroir **16** conforme à l'invention s'étend suivant le plan (P1) perpendiculaire au sol.

De préférence, dans un mode de réalisation, le miroir **16** est positionné à 45° par rapport à l'axe optique (A). Autrement dit, le miroir **16** s'étend dans un plan (P1) formant un angle α de 45° par rapport à l'axe optique (A).

Figure 1,2,3, est montré au moins un dispositif d'affichage **20** pour afficher une image numérique instantanée ou une image traitée par un dispositif de traitement **15.** Le dispositif d'affichage 20 est positionné à un angle β compris entre -45 et 45° par rapport à l'axe optique (A) et est orienté vers la face réfléchissante **17.** Autrement dit, le dispositif d'affichage **20** s'étend dans un plan (P2) formant un angle β compris entre -45 et 45° par rapport à l'axe optique (A).

Comme montré sur la figure 1, l'au moins un dispositif d'affichage **20** peut comprendre plusieurs positions angulaires ; sur la figure 1, dans une première position, le dispositif d'affichage **20** est positionné parallèlement à l'axe optique (A) est fait un angle β avec une seconde position angulaire du dispositif d'affichage.

En outre, comme montré sur les figures 1,2,3, l'au moins un dispositif d'affichage **20** conforme à l'invention s'étend suivant le plan (P2) perpendiculaire au sol.

De préférence, dans un mode de réalisation montré sur la figure 1, le dispositif d'affichage **20** est positionné parallèlement à l'axe optique (A). Autrement dit, le dispositif d'affichage **20** s'étend dans un plan (P2) parallèle à l'axe optique (A).

Dans un mode de réalisation de l'invention, le dispositif **1** comprend un premier dispositif d'affichage **20** orienté horizontalement pour afficher des prises de vue du type portrait et un second dispositif d'affichage **20** orienté verticalement pour afficher des prises de vue du type paysage. Autrement dit, le dispositif **1** comprend un premier dispositif d'affichage **20** rectangulaire dans lequel le plus grand côté s'étend parallèlement au sol et un second dispositif d'affichage **20** rectangulaire dans lequel le plus petit côté s'étend parallèlement au sol.

Dans un autre mode de réalisation, les premier **13a** et second **13b** appareils communiquent respectivement avec les premiers et seconds dispositifs d'affichage.

L'au moins un appareil **13** de prise de vue acquiert et produit une image du sujet (image de préférence numérique). La ci-avant mentionnée image du sujet est communiquée à un dispositif de traitement **15** de l'image.

Le dispositif de traitement **15** de l'image est un moyen du type ordinateur personnel ou équivalent. On peut également imaginer que l'appareil **13** de prise de vue ne soit pas électronique, mais que ce soit un appareil **13** de prise de vue du type argentique, aussi appelée appareil de prise de vues analogique, auquel cas le dispositif de traitement **15** de l'image comprendra une carte de capture convertissant les signaux analogiques, provenant de l'appareil **13** de prise de vues analogique, en signaux numériques.

Le dispositif de traitement **15** traite l'image et le transmet à l'au moins un dispositif d'affichage **20.** Le sujet peut alors se voir en temps réel sur l'au moins un dispositif d'affichage **20** où son image a été traitée par le dispositif de traitement **15.**

Figures 1,2,3, l'image ainsi affichée sur le dispositif d'affichage **20** se reflète alors sur le miroir **16** sans tain et peut être vue par le sujet alors qu'il est de face. Il aura l'impression de se voir comme dans un miroir **16.** Si le sujet souhaite se voir de trois-quarts pour faire une prise de vue, il peut alors s'orienter vers le dispositif d'affichage **20.**

Dans tous les cas, le sujet adapte sa pose à l'image en temps réel qu'il perçoit de lui-même lorsqu'il regarde le miroir **16** ou l'au moins un dispositif d'affichage **20.**

L'image est alors optimisée par le traitement effectué par le dispositif de traitement **15,** permettant alors d'améliorer le rendu de l'image photographiée. Des réglages de cadrage et d'orientation de la prise de vue peuvent également être opérés directement par le sujet au moyen d'un pupitre **21** de commande.

Dans un mode de réalisation, lorsque le sujet déclenche une prise de vue, la prise de vue peut alors être retraitée et enregistrée sur le disque mémoire du dispositif de traitement **15.** Cela peut permettre à un tiers de profiter de l'adhésion du sujet à la prise de vue, tout en utilisant ses compétences pour faire un post-traitement.

Un tel traitement peut alors être effectué par le dispositif **1** pour obtenir une image de qualité d'ordre professionnel ; son temps de traitement est alors plus long que celui d'un traitement dit amateur. Par ailleurs, il est prévu que le dispositif **1** propose plusieurs types de traitement afin de satisfaire des besoins venant aussi bien des sujets souhaitant faire une prise de vue rapide que des sujets souhaitant obtenir un rendu d'ordre professionnel.

Dans un autre mode de réalisation, le dispositif de traitement d'image **15** comprend des moyens pour compenser la perte de puissance lumineuse due au miroir **16** sans tain.

Les moyens d'éclairage ainsi que les réglages des appareils de prise de vue ci-dessus mentionnés pourront permettre de compenser la perte de luminosité due au miroir **16** sans tain et/ou du dispositif d'affichage **20,** et d'estomper les défauts de la peau conformément aux pratiques professionnelles. Cela donne une image embellie du sujet en instantanée, améliorant ainsi son adhésion à la prise de vue.

Dans encore un autre mode de réalisation, le miroir **16** sans tain comprend une ouverture **19** disposée dans l'alignement de l'axe optique (A).

Dans un mode de réalisation, le dispositif **1** comprend le pupitre **21** de commande communiquant avec ledit au moins un appareil **13** de prise de vue et/ou ledit dispositif de traitement **15,** ledit pupitre **21** étant disposé à proximité immédiate dudit emplacement **10.** En premier lieu, le pupitre **21** de commande a pour fonction de déclencher les prises de vue.

Le pupitre **21** peut par exemple contrôler les déplacements du support **22** motorisé. Il contrôle les mouvements de translation selon plusieurs axes : vertical, horizontal et transversal. En outre, le pupitre **21** peut également contrôler l'inclinaison : descendante, ascendante, droite et gauche. Il est également adapté à piloter le « zoom » (agrandissement et réduction de la distance focale).

Le pupitre **21** peut également ne pas être à proximité immédiate de l'emplacement **10,** mais à un autre endroit dans le dispositif **1.** Il est par exemple envisageable que le pupitre **21** de commande soit actionné par une tierce personne qui assiste et dirige le sujet. Il est également imaginable que la tierce personne pilote à distance les réglages ci-dessus mentionnés via des moyens de communication du type internet.

Par ailleurs, dans un mode de réalisation, le dispositif 1 peut également comprendre des moyens d'éclairage du sujet, situés dans le dispositif **1** et propre à mettre en valeur le sujet lors d'une séance de prise de vues. Les moyens d'éclairage fournissent soit un éclairage continu avec une répartition en cadre ou en halo, soit par flash. Ces moyens d'éclairage peuvent être contrôlés par un pupitre **21** de commande afin de modifier les effets de lumière. A titre d'exemple, des effets de spot sur les cheveux ou sur le fond **12** sont également possibles multipliant alors les possibilités du rendu visuel de l'image.

## Revendications

1. Dispositif (1) pour acquérir une image d'un sujet, le dispositif (1) posé sur le sol comprenant :
un emplacement pour recevoir un sujet devant un fond (12)
- au moins un appareil (13) de prise de vues pour acquérir et produire une image du sujet, ledit appareil (13) présentant un axe optique (A) ;
- un dispositif de traitement (15) de l'image pour traiter l'image numérique ;
- un miroir (16) sans tain comprenant une face réfléchissante (17) orientée vers ledit fond (12), ledit miroir (16) étant positionné à un angle (α) compris entre 30 et 60° par rapport à l'axe optique (A) et étant disposé entre l'emplacement (10) et l'au moins un appareil (13) de prise de vue ;
- au moins un dispositif d'affichage (20) pour afficher une image numérique instantanée ou une image traitée par ledit dispositif de traitement (15), ledit dispositif (20) étant positionné à un angle (β) compris entre -45 et 45° par rapport à l'axe optique (A) et étant orienté vers ladite face réfléchissante (17) ;
**caractérisé en ce que** le dispositif d'affichage (20) et le miroir (16) sans tain s'étendent chacun suivant un plan (Pl,P2) perpendiculaire au sol.

2. Dispositif (1) selon la revendication 1, **caractérisé en ce que** le miroir (16) sans tain est positionné à 45° par rapport à l'axe optique (A).

3. Dispositif (1) selon l'une des revendications précédentes, **caractérisée en ce que** le dispositif d'affichage (20) est positionné parallèlement à l'axe optique (A).

4. Dispositif (1) selon l'une des revendications précédentes, **caractérisée en ce qu'**elle comprend un pupitre (21) de commande communiquant avec ledit au moins un appareil (13) de prise de vue et/ou ledit dispositif de traitement (15), ledit pupitre (21) étant disposé à proximité immédiate dudit emplacement (10).

5. Dispositif (1) selon l'une des revendications précédentes, **caractérisée en ce qu'**elle comprend un premier appareil (13a) orienté horizontalement pour faire des prises de vue du type portrait et un second appareil (13b) orienté verticalement pour faire des prises de vue du type paysage.

6. Dispositif (1) selon l'une des revendications précédentes, **caractérisée en ce qu'**elle comprend un premier dispositif d'affichage rectangulaire dans lequel le plus grand côté s'étend parallèlement au sol et un second dispositif d'affichage rectangulaire dans lequel le plus petit côté s'étend parallèlement au sol.

7. Dispositif (1) selon les revendications 5 et 6, **caractérisée en ce que** les premier (13a) et second (13b) appareils communiquent respectivement avec les premier (20a) et second (20b) dispositifs d'affichage.

8. Dispositif (1) selon l'une des revendications précédentes, **caractérisée en ce que** le dispositif de traitement (15) d'image comprend des moyens pour compenser la perte de puissance lumineuse due au miroir (16) sans tain.

9. Dispositif (1) selon l'une des revendications précédentes, **caractérisée en ce que** le miroir (16) sans tain comprend une ouverture (19) disposée dans l'alignement de l'axe optique (A).

10. Dispositif (1) selon la revendication 4, **caractérisée en ce que** l'au moins un appareil (13) est monté articulé sur un support (22) suivant des axes horizontal et vertical, ledit support (22) étant commandé par ledit pupitre (21) de commande pour régler l'inclinaison horizontale et/ou verticale.
